# EUROPÄISCHE PATENTSCHRIFT

(11) **EP 0 634 080 B1**
(45) Veröffentlichungstag und Bekanntmachung des Hinweises auf die Patenterteilung: **09.10.1996**
(21) Anmeldenummer: 93906444.0
(22) Anmeldetag: 25.03.1993
(51) Int. Cl.: H04Q 3/66, H04L 12/56

(54) **VERFAHREN ZUR LEITWEGLENKUNG VON FERMELDEVERBINDUNGGEN IN EINEM VERMASCHTEN NETZ**
PROCEDURE FOR ROUTING TELECOMMUNICATIONS IN A MESHED NETWORK
PROCEDE DE ROUTAGE DE TELECOMMUNICATIONS DANS UN RESEAU MAILLE

(30) Priorität: 26.03.1992 DE 4209906
(43) Veröffentlichungstag der Anmeldung: 18.01.1995
(73) Patentinhaber: SIEMENS AKTIENGESELLSCHAFT, 80333 München (DE)
(72) Erfinder: WILLE, Klaus, D-8000 München 80 (DE); MARTIN, Karl-Heinz, D-8000 München 70 (DE); KOFLER, Christian, D-8000 München 70 (DE)
(86) Internationale Anmeldenummer: DE9300277
(87) Internationale Veröffentlichungsnummer: WO9319558

(56) Entgegenhaltungen:
- EP-A- 0 398 614
- US-A- 4 656 658
- US-A- 4 884 263
- US-A- 5 014 262
- US-A- 5 095 480

## Beschreibung

Der Begriff der vermaschten Netze bzw. der Maschennetze bezeichnet Nachrichtennetze ohne Rangordnung von Knoten, bei dem jeder Knoten mit mindestens zwei weiteren Knoten verbunden ist. Ein voll vermaschtes Netz liegt vor, wenn jeder Knoten mit jedem anderen Knoten des Netzes unmittelbar verbunden ist. Bei einer vermaschten Netzkonfigurierung mit Leitweglenkung von Fernmeldeverbindungen besteht bei sogenannten Bündelengpässen die Gefahr einer Schleifenbildung, die über mehrere Netzknoten erfolgt. Wird der Bündelengpaß, der zu der Schleifenbildung geführt hat, nicht behoben, so durchläuft die Fernmeldeverbindung die Schleife solange, bis sämtliche Wege belegt sind.

Aus der veröffentlichten europäischen Patentanmeldung mit der Anmeldenummer 90 125 088.6 ist bereits ein Verfahren zur Suche eines Alternativweges in einem Kommunikationsnetzwerk bekannt. Im Rahmen des bekannten Verfahrens ist zunächst das gesamte Netz auf den Ausfall eines oder mehrerer Knoten und/oder den Ausfall eines oder mehrerer Verbindungswege zwischen zwei Knoten zu überprüfen. Anschließend sind die von den erkannten Ausfällen betroffenen Knoten in jedem Weg zu identifizieren. Daran anschließend ist eine als "restoration message" bezeichnete Nachricht zu bilden, die eine Kennzahl des Senderknotens und Kennzahlen der von den Ausfällen betroffenen Knoten umfaßt. Ferner ist zu prüfen, ob einer der letztgenannten Knoten den Endknoten eines Alternativweges darstellt. Schließlich wird ein Alternativweg durch das Kommunikationsnetz bestimmt. Insgesamt erfordert das bekannte Verfahren eine Vielzahl von Verfahrensschritten mit der Folge, daß die an dem Verfahren beteiligten Steuerungen erheblich belastet werden.

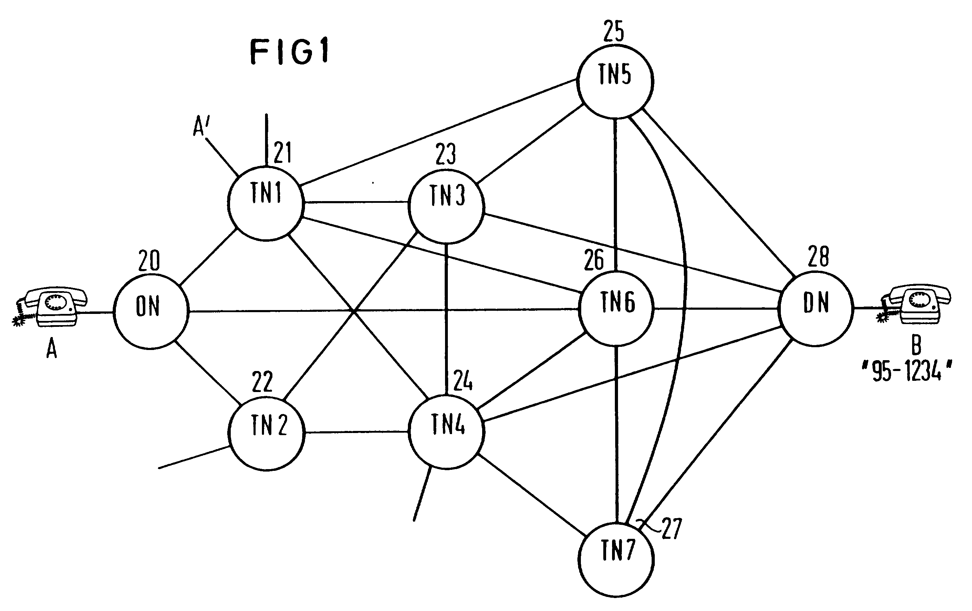

Aus der veröffentlichten europäischen Patentanmeldung mit der Anmeldenummer 90 311 577.2 ist bereits ein als "telecommunications network route selection" benanntes Verfahren bekannt. Die Auswahl eines Weges von einer Nachrichtenquelle zu einem Nachrichtenziel erfolgt dabei unter anderem anhand einer sogenannten "busy/idle status information", die netzweit zu erstellen und zu verwalten ist. In diesem Zusamhang wird in Netzknoten ferner jeweils eine sogenannte "source destination restriction map" gebildet. In einer solchen Tabelle ist für Verbindungen von bestimmten Quellenknoten zu einem weiteren Netzknoten angegeben, welche von diesem Netzknoten abgehenden Verbindungsstrecken zulässig sind. Dabei werden Netzschleifen jedoch nicht ausgeschlossen: für eine Verbindung von einem Quellenknoten (z.B. source "2") zu dem weiteren Knoten (z.B. "1") kann eine Verbindungsstrecke (z.B. "20") als zulässig angegeben sein, über die die Verbindung bereits gelenkt worden ist (FIG 1: 2-11-3-20-1-20...).

Verfahren zum Aufbau von Fernmeldeverbindungen sind bereits auch aus der deutschen Patentschrift DE 36 26 870 sowie aus den Auslegeschriften 1 512 858 und 1 487 989 bekannt, wobei zum Teil vorgesehen ist, in die Signalisierungsinformation eine die Ursprungsvermittlung bezeichnende Information einzufügen. Diese Information dient bei den vorbekannten Verfahren allerdings nicht dazu, Schleifenbildungen zu verhindern. Bei dem aus der deutschen Patentschrift DE 36 26 870 vorbekannten Verfahren wird ein digitales Fernmeldenetz in sogenannte Leitwegzellen aufgeteilt, die jeweils aus mehreren Zeichengabepunkten bestehen. Innerhalb einer Leitwegzelle werden von möglichen Zeichengabestrecken nur bestimmte Zeichengabestrecken zwischen den Zeichengabepunkten fortschreitend in der Zielrichtung zur Auswahl freigegeben, wobei das Kreisen von Zeichengabenachrichten innerhalb einer Leitwegzelle vermieden wird. Bei dem aus der deutschen Auslegeschrift 1 512 858 bekannten Verfahren werden Verbindungen über eine als Satellit ausgebildete Relaisstation geführt, wobei ein freier Sprechweg in Vorwärtsrichtung ausgewählt wird und wobei ein Belegungszeichen mit einem den ausgewählten Sprechweg und die Ausgangsvermittlungsstelle kennzeichnenden Identitätszeichen zur Zielvermittlungsstelle übertragen wird. Bei dem aus der deutschen Auslegeschrift 1 487 989 bekannten Verfahren ist eine Zusatzinformation über den Eignungsgrad des einzuschlagenden und/oder des durchlaufenen Weges vorgesehen. Ferner ist bei diesem Verfahren die Bildung einer Information vorgesehen, welche die Anzahl der durchlaufenen Verbindungsabschnitte kennzeichnet, wobei in Durchgangsvermittlungsstellen Prüfmittel zur Kontrolle dieser Information vorgesehen sind und wobei bei Erreichen einer größten, vorgegebenen Anzahl von durchlaufenen Verbindungsabschnitten auf dem betreffenden Weg die weitere Wegsuche abgebrochen wird.

Aus den Produktschriften der Fa.Siemens "HICOM 300 System Product Data", Ordering No. A19100-K3161-430-X-7600, Seiten 55/56, und "Private Kommunikationssystems, HICOM schafft Verbindungen", Bestell-Nr. A19100-K3160-A302, Seite "HICOM 300 Networking" ist bereits ein Kommunikationssystem ("HICOM 300") bekannt, das einen Netzknoten in einem vermaschten Netz bilden kann. Dabei kann für über Transitknoten aufzubauende Fernmeldeverbindungen vorgesehen sein, daß in Transitknoten anhand einer den Zielknoten identifizierenden Knotennummer geprüft wird, ob eine Fernmeldeverbindung zu dem Zielknoten zulässig ist. Bei einem derartigen Aufbau von Fernmeldeverbindungen besteht allerdings die Gefahr von Netzschleifenbildungen.

Der Erfindung liegt daher die Aufgabe zugrunde, ein Verfahren zur Leitweglenkung von Fernmeldeverbindungen in einem vermaschten Netz anzugeben, bei dem die Gefahr von Schleifenbildungen vermindert wird.

Die Lösung dieser Aufgabe erfolgt erfindungsgemäß mit den Merkmalen des Patentanspruchs 1.

Die erfindungsgemäße Lösung erfordert weder irgendwelche Modifikationen des vermaschten Netzes noch einen Eingriff in die Hardware-Struktur der Netzknoten, die insbesondere als Vermittlungsstellen ausgebildet sind. Das diesen Netzknoten zugeordnete Steuerungsprogramm ist nur geringfügig zu modifizieren. Mit der erfindungsgemäßen Lösung wird die Gefahr für eine Schleifenbildung verringert bzw. ausgeschlossen; damit werden zugleich die Voraussetzungen für eine verbesserte Verkehrsauslastung geschaffen.

Die Ausführungsform der Erfindung gemäß Anspruch 3 unterstützt die Maßnahmen nach den Ansprüchen 1 und 2 insbesondere auch in vermaschten Netzen mit einer Vielzahl von Knoten. Durch die Kombination der Maßnahmen nach den Ansprüchen 1 und 3 läßt sich ebenso wie nach dem erfindungsgemäßen Verfahren nach Anspruch 2 die Gefahr von Netzschleifenbildungen vollkommen ausschließen.

Weitere vorteilhafte Ausführungsformen der Erfindung sind in den Unteransprüchen gekennzeichnet.

Die Erfindung wird nun anhand der Zeichnungen beschrieben. Es zeigt
- FIG 1: ein vermaschtes Netz;
- FIG 2 und 3: Tabellen, die Transitknoten in dem Netz nach FIG 1 zugeordnet sind,
- FIG 4: ein Blockschaltbild der Komponenten eines Transitknotens nach FIG 1 bzw. 2, die an der Realisierung des erfindungsgemäßen Verfahrens beteiligt sind, und
- FIG 5: die Struktur der von Transitknoten nach den FIG 1 bis 3 gebildeten Signalisierungsinformationen.

In FIG 1 ist ein vermaschtes Netz mit mehreren Knoten dargestellt, wobei eine Fernmeldeverbindung von einer Fernmeldeeinrichtung A (z. B. Fernsprechendgerät, Telefax-Gerät, usw.) zu einer Fernmeldeeinrichtung B aufzubauen ist. Die Netzknoten haben die Funktion eines Ursprungsknotens ON (origin node), von Durchgangs- oder Transitknoten TNx (transition node) und eines Zielknotens DN (destination node). Beispielsweise sind sieben Transitknoten TN 1 ... TN 7 vorgesehen, die wie in der FIG 1 dargestellt miteinander verbunden sind. Damit läßt sich eine Fernmeldeverbindung zwischen den Fernmeldeeinrichtungen A und B auf verschiedenen Wegen herstellen: Beispielsweise auf dem Weg ON-TN6-DN, ON-TN2-TN4-DN und ON-TN2-TN3-TN5-TN7-TN6-DN.

Diese Beispiele verdeutlichen, daß Fernmeldeverbindungen auf unterschiedlichen Wegen, über eine unterschiedliche Anzahl von Knoten und Wegstrecken zwischen dem Ursprungsknoten ON und dem Zielknoten DN bzw. zwischen den Einrichtungen A und B herstellbar sind. Diese Möglichkeiten ergeben sich aufgrund der vermaschten Struktur des Netzes und einer entsprechenden Konfigurierung der Netzknoten, ON TN1,...TN7, DN, denen eine knotenindividuelle Nummer KON, KTN1, ... KTN7, KDN zugeordnet wird. Beispielsweise sind diesen Knoten - wie in FIG 1 angegeben - die Knotennummern 20...28 zugeordnet. Das erfindungsgemäße Verfahren wird dadurch eingeleitet, daß in die sendeseitige Fernmeldeendeinrichtung A die Rufnummer der empfangsseitigen Fernmeldeendeinrichtung B eingegeben wird. Diese B-Rufnummer, z. B. 95-1234 besteht aus einer Kennzahl (hier: 95), die beispielsweise einen Nebenstellenbereich "95" bezeichnet, sowie aus einer Nebenstellennummer 1234.

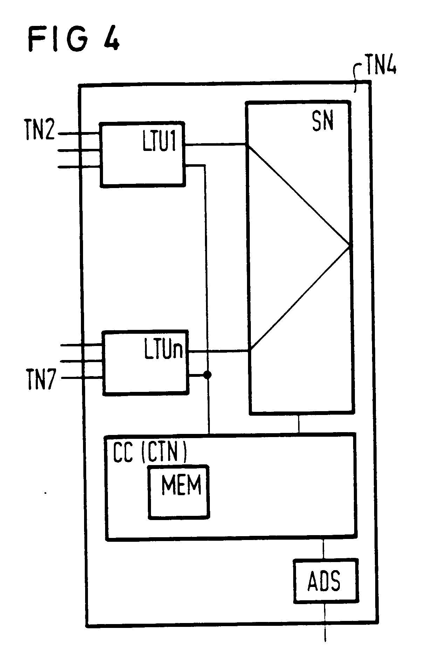

In die Signalisierungsinformation der aufzubauenden Fernmeldeverbindung wird neben der B-Rufnummer (95-1234) auch eine die Ursprungsknotennummer KON (hier: 20) bezeichnende Information eingefügt. Die Fernmeldeverbindung wird nun in an sich bekannter Weise entsprechend der vorgegebenen Netzstruktur entweder dem Transitknoten TN1, dem Transitknoten TN6 oder dem Transitknoten TN2 zugeführt. Es wird nun davon ausgegangen, daß aufgrund der aktuellen Verkehrssituation die Fernmeldeverbindung vom Ursprungsknoten ON zu dem Transitknoten TN2 geführt wird. Hierzu wird die entsprechende Signalisierungsinformation, die - wie bereits beschrieben - die B-Rufnummer (95-1234) sowie die Ursprungs-knotennummer KON (20) enthält, dem Transitknoten TN2 zugeführt. Die Steuerung (CTN, FIG 4) des Transitknotens TN2 ordnet die in der B-Rufnummer enthaltene Kennzahl 95 der Zielknotennummer 28 zu.

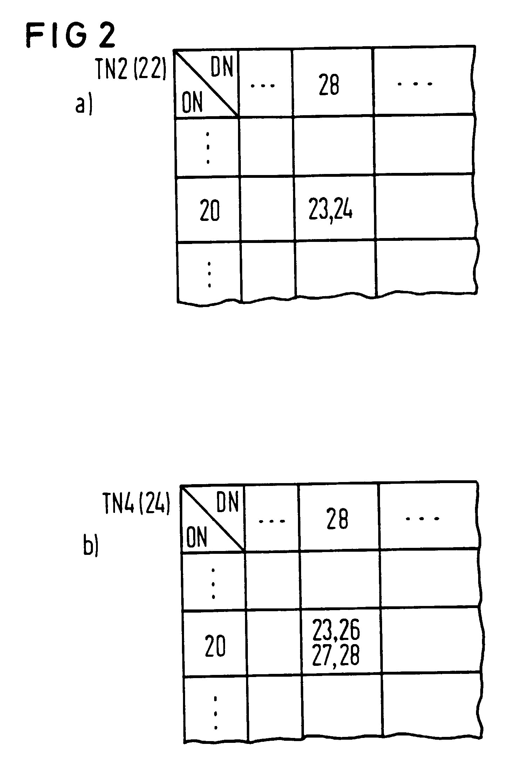

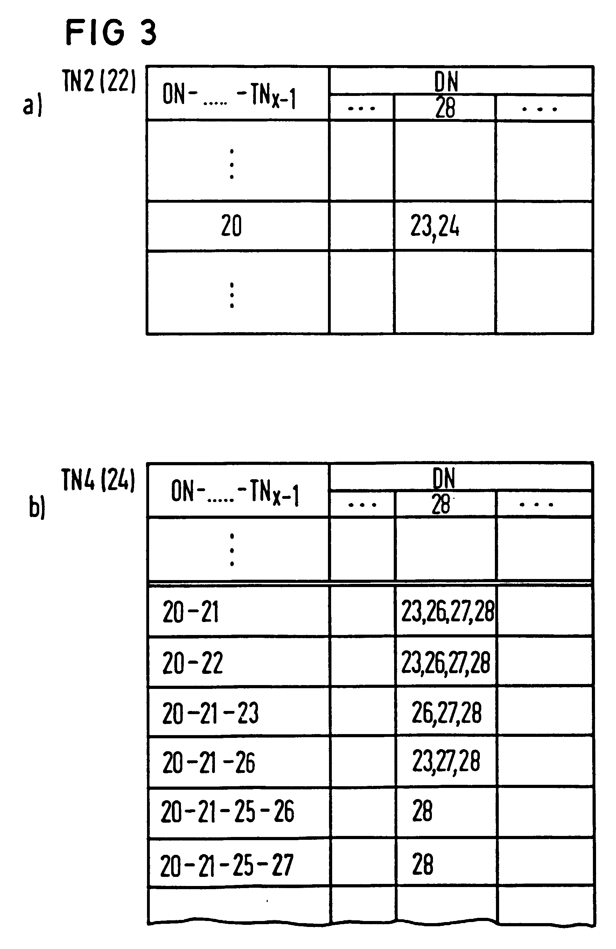

Jedem Knoten ist eine Tabelle zugeordnet, die in Abhängigkeit vom Ursprungsknoten ON und Zielknoten DN zulässige Verbindungen angibt. Diese Verbindungen sind beispielsweise durch die Nummern der Knoten gekennzeichnet, über die die zulässigen Verbindungen zu führen sind. Beispiele für solche Tabellen sind in den FIG 2 (Ausführungsform der Erfindung gemäß Anspruch 1) und 3 (Ausführungsform der Erfindung gemäß Anspruch 2) angegeben. Die FIG 2a und 3a zeigen je eine Tabelle für den Transitknoten TN2 und die FIG 2b und 3b zeigen je eine Tabelle für den Transitknoten TN4.

Gelangt nun, wie zuvor beschrieben wurde, eine Fernmeldeverbindung zu dem Transitknoten TN2 mit der Knotennummer 22, so ermittelt die Steuerung dieses Knotens anhand der in FIG 2a) dargestellten Tabelle in Abhängigkeit der Knotennummer (20) für den Ursprungsknoten unc in Abhängigkeit der Knotennummer (28) des Zielknotens, zu welchen Netzknoten zulässige Verbindungen herstellbar sind. Dies sind, wie in der Tabelle in FIG 2a) angegeben, die Netzknoten 23 und 24. Demgegenüber ist eine Verbindung vom Knoten TN2 mit der Knotennummer KTN2 = 22 zum Ursprungsknoten ON mit der Knotennummer KON = 20 unzulässig. Die Fernmeldeverbindung wird also entweder zu dem Knoten 23 oder zu dem Knoten 24 geführt. In diesen Knoten 23 bzw. 24 werden dann die Verfahrensschritte durchgeführt, die bereits im Knoten TN2 = 22 durchgeführt wurden.

Im Knoten 24 greift die entsprechende Knotensteuerung (FIG 4: CC (CTN)) auf die in FIG 2b) dargestellte Tabelle zu und ermittelt die Knoten 23, 26, 27 und 28 als zulässige Folgeknoten. Damit ist ausgeschlossen, daß die aufzubauende Fernmeldeverbindung zu den Knoten 21 bzw. 22 zurückgeführt wird.

Die Prüfung der Netzknotensteuerungen auf zulässige Wege zu benachbarten Knoten erfolgt zum einen, wie bereits beschrieben, anhand der in der Signalisierungsinformation mitübertragenen Ursprungsknotennummer. Zum anderen ist insbesondere vorgesehen, daß die Zielknotenkennzahl ("Richtungskennzahl", hier: 95), die sendeseitig gewählt wurde und ebenfalls in der Signalisierungsinformation übertragen wird, von den Netzknotensteuerungen in die Zielknotennummer (hier: 28) umgewertet wird.

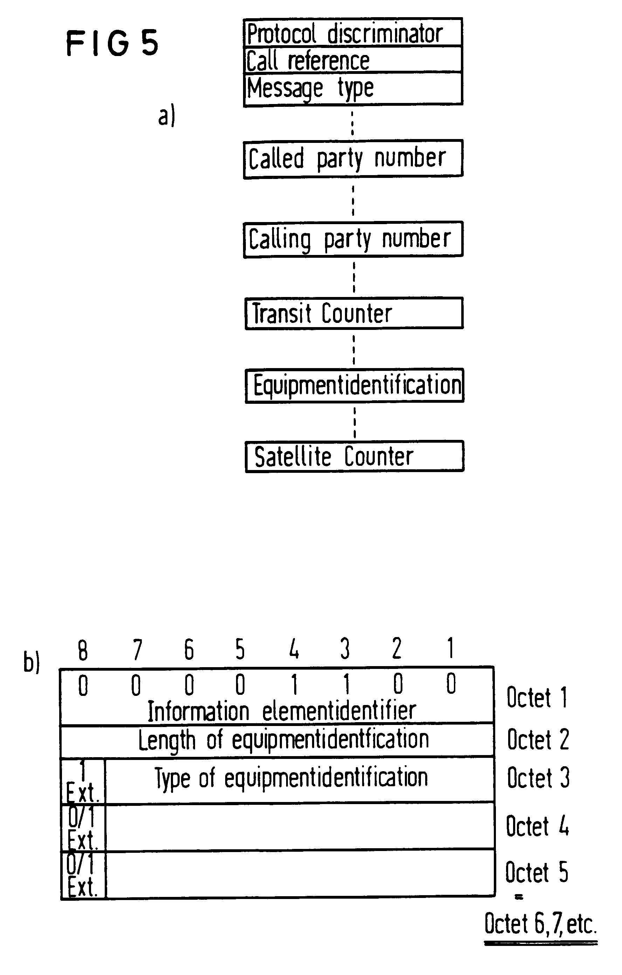

Mit dem vorstehend anhand der FIG 2 dargestellten Verfahren wird also die Gefahr einer Netzschleifenbildung verringert. Die Gefahr einer Netzschleifenbildung wird durch die folgende Ausführungsform des erfindungsgemäßen Verfahrens ausgeschlossen. Dabei ist vorgesehen, daß zu der aufzubauenden Fernmeldeverbindung in jedem Transitknoten, den die Fernmeldeverbindung durchläuft, eine den jeweiligen Knoten identifizierende Knotennummer in die der Fernmeldeverbindung zugeordnete Signalisierungsinformation eingefügt wird. Bei einer Fernmeldeverbindung, die von dem Ursprungsknoten ON = "20" zu dem Transitknoten TN2="22" geführt wird, enthält die Signalisierungsinformation wie bei der anhand der FIG 2a) beschriebenen Ausführungsform der Erfindung - abgesehen von sonstigen Informationen (FIG 5) - nur die Knotennummer des Ursprungsknotens, nicht jedoch die Knotennummer eines durchlaufenden Transitknotens.

Im Transitknoten "22" werden also anhand der Knotennummer "20" des Ursprungsknotens ON und anhand der Zielknotennummer 28 die Knotennummern der zulässigen Knoten ermittelt. Dies sind die Knoten 23 und 24. Bei diesem ersten, dem Ursprungsknoten unmittelbar nachgelagerten Transitknoten 22 ergeben sich also wie bei dem anhand von FIG 2a) dargestelltem Beispiel dieselben zulässigen Knoten 23 und 24. In FIG 3b), in der ebenfalls wie in FIG 3a) die zulässigen Knoten in Abhängigkeit der vorgelagerten Netzknoten und des Zielknotens angegeben sind, sind für den Netzknoten TN4 beispielhafte Kombinationen von Ursprungsknoten und vorgelagerten Knoten angegeben (20, 20-22, 20-21-23, ...).

Ist beispielsweise die Fernmeldeverbindung über die Knoten 20 und 22 geleitet worden, wo in die Signalisierungsinformation die Knotennummerninformation "20" und "22" eingefügt wurden, so kann die Verbindung weiter alternativ über die Knoten 23, 26, 27 oder 28 geführt werden. Demgegenüber sind Verbindungswege über die Knoten 21 und 22 ausgeschlossen, so daß in diesen Knoten beginnende bzw. fortgesetzte Netzschleifen unterbunden werden.

Bei den Knoten handelt es sich insbesondere um Kommunikationssysteme, die in den veröffentlichten europäischen Patentanmeldungen EP 0 306 693 Al (US-PS 4,903,258), EP 0 303 870 A2 (US-PS 5,018,097) und EP 0 303 869 A1 (US-PS 5,047,923) offenbart sind. In FIG 4 sind lediglich die für das Verständnis der Erfindung erforderlichen Komponenten des Kommunikationssystems dargestellt: Dieses umfaßt eine Steuerung CC (CTN), ein Koppelnetz SN sowie Anschlußeinheiten LTU1...LTUn. Diese Anschlußeinheiten umfassen Teilnehmeranschlußschaltungen und Leitungssatzschaltungen. Die Teilnehmeranschlußschaltungen sind teilnehmerorientierte Geräteanschlüsse, wie beispielsweise ISDN-Basisanschlüsse für digitale mono- und multifunktionale Endgeräte. Die Leitungssatzschaltungen dienen zur Verbindung mit öffentlichen und/oder privaten Netzen und sind beispielsweise ISDN-Basisanschlüsse für ISDN-Amtsverkehr und ISDN-Querverkehr.

Die Teilnehmeranschluß- und Leitungssatzschaltungen haben die gleichen systeminternen Schnittstellen. Sie koppeln die einzelen Basiskanäle, auf denen Nutzdaten, d.h. Sprach- und/oder Dateninformationen übertragen werden, an eine beliebige Auswahl aus 2 Multiplexkanälen mit beispielsweise 32 Kanälen des Koppelnetzes SN und übergeben die in einen Steuerkanal übertragenen Signalisierungsinformationen als HDLC-Protokoll an die Steuerung CC (CTN). Dieser Steuerung ist ein Speicher MEM zugeordnet, in dem die in den FIG 2 und 3 angegebenen Tabelleninformationen abgespeichert sind. Die Tabelleninformationen sind insbesodere über betriebstechnische Befehle, die in eine betriebstechnische Einheit ADS einzugeben sind, konfigurierbar. Ebenso ist ein erster Schwellwert, der eine Anzahl maximal zu durchlaufender Wegstrecken im Netz angibt, und gegebenenfalls ein zweiter Schwellwert, der eine Anzahl maximal zu durchlaufender Satellitenwegstrecken angibt, in die Einheit ADS eingebbar (vgl. Ansprüche 3 und 4). Das in FIG 4 dargestellte Kommunikationssystem, das beispielsweise den Knoten TN4 bildet, stellt u.a. Verbindungen zu benachbarten Knoten, beispielsweise zu den Knoten TN2 und TN7, her.

Das in FIG 1 dargestellte vermaschte Netz kann beispielsweise ein Netz sein, für das das bekannte CorNet-Protokoll implementiert ist (Siemens Aktiengesellschaft Private Communication Systems and Networks Division: "CorNet Signalling for ISDN Communication in Corporate networks", Ordering No. A19100-K3110-G284-X-7600, Berlin and Munich 1987; "CorNet functional specification"). Die Verbindungsaufbaunachricht ("Setup message") kann dabei wie in FIG 5a) strukturiert sein. Diese Nachricht besteht dabei aus den folgenden Informationselementen: Protocol discriminator, Call reference, Message type, ... Called party number, ... Calling party number, ... Transit Counter, ... Equipment Identification, ... Satellite Counter ...

Das Informationselement "Protocol discriminator" gibt den Protokolltyp, z.B. CorNet, an; "Call reference" bezeichnet eine laufende Prozeßnummer und "message type" bezeichnet die Art der Signalisierungsnachricht, hier: "Verbindungsaufbau" (Setup).

Die "called party number" (B-Rufnummer) enthält neben der eigentlichen Rufnummer wie bereits beschrieben, die Bereichskennzahl (95), die dem Zielknoten DN (28) zugeordnet ist.

Das Informationselement "Calling party number" bezeichnet die A-Rufnummer, die bei Rufnummernsignalisierung in offener Numerierung um die dem Ursprungsknoten zugeordnete Kennzahl ergänzt ist. Sofern bei dem erfindungsgemäßen Verfahren in der Signalisierungsinformation nicht die Ursprungsknotennummer enthalten ist bzw. von einer Netzknotensteuerung nicht ausgewertet werden kann, wertet diese bei der Auswertung der Tabellen nach den FIG 2 und 3 die Ursprungsknotenkennzahl in die Ursprungsknotennummer um.

Das Informationselement "Transit Counter" bezeichnet die Anzahl der durchlaufenden Knoten (vgl. Anspruch 3).

Das Informationselement "equipment identification", das noch anhand von FIG 5 b) beschrieben wird, bezeichnet die Knotennummer (20) des Ursprungsknotens ON sowie gegebenenfalls die Nummern (z.B. -22-24-) der Knoten (TN2, TN4, ...), zu dem die Fernmeldeverbindung geführt worden ist (Verkettung der Knotennummern, FIG 3b)).

Das Informationselement "Satellite-Counter" bezeichnet die aktuelle Anzahl der durchlaufenden Wegstrecken, die jeweils zwischen zwei Netzknoten über Satelliten geführt werden, sowie die maximal zulässige Zahl dieser Wegstrecken ("zweiter Schwellwert").

In FIG 5b) ist die Struktur des Informationselements "equipment identification" angegeben, das aus mehreren Teilen mit jeweils 8 bit (Octet 1....) besteht. Im Octet 1 (Information element identifier) ist für das Informationselement "Equipment identification" eine informationselementindividuelle Kennzeichnung angegeben; im Octet 2 ist die Länge des Informationselements (Anzahl der Octets) angegeben. In Octet 3 ist angegeben, daß in den folgenden Octets Knotennummern angegeben sind. Dies ist die Ur sprungsknotennummer (Anspruch 1 und 2) bzw. die Knotennummern weiterer durchlaufender Knoten (Anspruch 2). "1 Ext." bzw. "0/1 Ext." an der 8. Bitstelle gibt an, ob eine in einem Octet angegebene Information im folgenden Octet fortgeführt wird.

Verbindungen, die ihren Ursprung im öffentlichen Amt haben und zu einer an einen Netzknoten angeschlossenen empfangsseitigen Fernmeldeendeinrichtung B zu lenken sind, erhalten eine fiktive Ursprungsknotennummer, so daß auch Amtsverbindungen mittels dieser Knotennummer in jedem Transitknoten gegen die Zielknoten-Nummer geprüft werden können. Verbindungen aus anderen Knoten oder Netzen, welche nicht die Ursprungs-Knotennummer signalisieren können, erhalten ebenfalls eine fiktive Ursprungs-Knotennummer, aufgrund der Einrichtung des ankommenden Bündels. Ganz allgemein gilt, daß ein beliebiger Netzknoten mit einer netzexternen sendeseitigen Fernmeldeendeinrichtung A' verbindbar ist, wobei dieser Netzknoten für A' eine fiktive Ursprungsknotennummer bildet.

Bei dem erfindungsgemäßen Verfahren ist weiterhin vorgesehen, daß die Zahl der durchlaufenden Knoten, insbesondere der durchlaufenden Transitknoten gezählt und mit einem vorgebbaren ersten Schwellwert verglichen wird. Die aufzubauende Verbindung wird nur dann zu einem weiteren Knoten geführt, wenn die Anzahl der zu durchlaufenden Knoten kleiner als ein vorgegebener Schwellwert bzw. gleich diesem Schwellwert ist. Zur Realisierung dieser Funktion ist in der Verbindungsaufbauinformation das Informationselement "Transit Counter" vorgesehen (FIG 5a)). Weiterhin kann vorgesehen sein, daß die aufzubauende Verbindung jeweils zwischen zwei Knoten über Satelliten geführt wird. Insgesamt kann eine Mehrzahl derartiger Verbindungswege zwischen jeweils zwei Netzknoten vorgesehen sein. Um die Anzahl dieser Satellitenstrecken zu begrenzen, die im Verlauf eines Verbindungsaufbaus belegt werden dürfen, kann ein sogenannter SATELLITE-Counter (FIG 5a)) durch entsprechende Software-Prozeduren realisiert werden. Dabei wird die Anzahl der zwischen zwei Knoten über Satelliten geführten Verbindungswegabschnitte gezählt. In den Netzknoten, die dem Ursprungsknoten nachgeordnet sind, wird dieser Zahlenwert mit einem zweiten Schwellwert verglichen. Die aufzubauende Fernmeldeverbindung wird nur dann über Satelliten zu einem weiteren Knoten geführt, wenn die Anzahl der über Satelliten geführten Verbindungswegabschnitte kleiner als ein vorgegebener Schwellwert ist bzw. gleich diesem Schwellwert.

## Patentansprüche

1. Verfahren zur Leitweglenkung von Fernmeldeverbindungen in einem vermaschten Leitungsvermittlungsnetz, wobei die Fernmeldeverbindungen von einer sendeseitigen Fernmeldeendeinrichtung (A) über einen Ursprungsknoten (ON), über Transitknoten (TN1,...TN7) und einen Zielknoten (DN) zu einer empfangsseitigen Fernmeldeendeinrichtung (B) gelenkt werden und wobei in Transitknoten (TN1,... TN7) anhand einer den Zielknoten (DN) identifizierenden ersten Information geprüft wird, ob eine Fernmeldeverbindung zu dem Zielknoten (DN) zulässig ist,
wobei in eine der aufzubauenden Fernmeldeverbindung zugeordneten Signalisierungsinformation eine den Ursprungsknoten (ON) identifizierende zweite Information eingefügt wird,
**dadurch gekennzeichnet,**
daß in Transitknoten (TNn) anhand der zweiten und ersten Information der unmittelbar folgende zu durchlaufende Knoten (TN(n+x), DN) bestimmt wird.

2. Verfahren nach Anspruch 1,
**dadurch gekennzeichnet,**
daß zu der aufzubauenden Fernmeldeverbindung in Transitknoten (TNn), zu denen die Fernmeldeverbindung geführt wird, jeweils eine den betreffenden Transitknoten (TNn) identifizierende dritte Information in die der Fernmeldeverbindung zugeordnete Signalisierungsinformation eingefügt wird, und daß in Transitknoten (TNn), zu denen die Fernmeldeverbindung geführt wird, anhand der ersten, zweiten und der dritten Informationen, der unmittelbar folgende zu durchlaufende Knoten (TN(n+x)) bestimmt wird.

3. Verfahren nach einem der vorstehenden Ansprüche,
**dadurch gekennzeichnet,**
daß bei der aufzubauenden Fernmeldeverbindung in jedem Knoten, zu dem die aufzubauende Fernmeldeverbindung geführt wird, die Anzahl der zuvor durchlaufenen Knoten um die Zahl "1" erhöht wird, daß diese um "1" erhöhte Zahl mit einem vorgebbaren ersten Schwellwert verglichen wird, und daß die aufzubauende Verbindung nur dann zu einem weiteren Knoten geführt wird, wenn die um "1" erhöhte Zahl geringer als oder gleich dem ersten Schwellwert ist.

4. Verfahren nach einem der vorstehenden Ansprüche,
**dadurch gekennzeichnet,**
daß die aufzubauende Fernmeldeverbindung zwischen jeweils zwei Knoten (ON, TN1; TN1, TN2; ...) über Satelliten geführt wird, daß die Anzahl der zwischen zwei Knoten (ON; TN1; TN1, TN2; ...) über Satelliten geführten Verbindungswegabschnitte gezählt und in den Knoten (TN1,...TN7, DN) mit einem zweiten Schwellwert verglichen wird und daß die aufzubauende Fernmeldeverbindung nur dann über Satelliten zu einem weiteren Knoten geführt wird, wenn die Anzahl der über Satelliten geführten Verbindungswegabschnitte geringer als oder gleich dem zweiten Schwellwert ist.

5. Verfahren nach einem der vorstehenden Ansprüche,
**dadurch gekennzeichnet**,
daß ein beliebiger Knoten (ON, TN1, TN7, DN) des Netzes mit einer netzexternen sendeseitigen Fernmeldeendeinrichtung (A') verbindbar ist, daß dieser Knoten (ON, TN1, ... TN7, DN) für diese Fernmeldeendeinrichtung (A') eine eigene, einen fiktiven Ursprungsknoten bezeichnende zweite Information in die Fernmeldeverbindung einfügt.

## Claims

1. Process for routing telecommunication calls in a meshed line switching network, in which the telecommunication calls from a transmitting-end telecommunication terminal (A) are routed via an originating node (ON), via transit nodes (TN1, ... TN7) and a destination node (DN) to a receiving-end telecommunication terminal (B), and in which it is checked in transit nodes (TN1, ... TN7) on the basis of first information identifying the destination node (DN) whether a telecommunication call to the destination node (DN) is permitted, and in which second information identifying the originating node (ON) is inserted into signalling information assigned to the telecommunication call to be established, characterized in that the node (TN(n+x), DN) which is immediately next on the route is determined in transit nodes (TNn) on the basis of the second and first information.

2. Process according to Claim 1, characterized in that, for the telecommunication call to be established, in transit nodes (TNn) to which the telecommunication call is routed, in each case third information identifying the respective transit node (TNn) is inserted into the signalling information assigned to the telecommunication call, and in that in transit nodes (TNn) to which the telecommunication call is routed, the node (TN(n+x)) which is immediately next on the route is determined on the basis of the first, second and third information.

3. Process according to one of the preceding claims, characterized in that in the case of the telecommunication call to be established, in each node to which the telecommunication call to be established is routed, the number of nodes previously passed through is incremented by the number "1", in that said number incremented by "1" is compared with a predeterminable first threshold value, and in that the call to be established is then only routed to a further node if the number incremented by "1" is less than or equal to the first threshold value.

4. Process according to one of the preceding claims, characterized in that the telecommunication call to be established is routed between in each case two nodes (ON, TN1; TN1, TN2; ...) via satellites, in that the number of connection path sections routed between two nodes (ON; TN1; TN1, TN2; ...) via satellites is counted and compared with a second threshold value in the nodes (TN1, ... TN7, DN), and in that the telecommunication call to be established is then only routed to a further node via satellites if the number of connection path sections routed via satellites is less than or equal to the second threshold value.

5. Process according to one of the preceding claims, characterized in that any node (ON, TN1, ... TN7, DN) of the network can be connected to a network-external transmitting-end telecommunication terminal (A'), in that said node (ON, TN1, ... TN7, DN) inserts its own second information indicating a fictitious originating node for this telecommunication terminal (A') into the telecommunication call.

## Revendications

1. Procédé d'acheminement de liaison de télécommunications dans un réseau maillé de commutation de circuits, dans lequel on achemine les liaisons de télécommunications d'un terminal (A) de télécommunication émetteur à un terminal (B) de télécommunication récepteur,par l'intermédiaire d'un noeud (ON) d'origine, par intermédiaire de noeuds (TN1 à TN7) de transit et d'un noeud (DN) de destination, on vérifie dans des noeuds (TN1 à TN7) de transit, sur la base d'une première information identifiant le noeud (DN) de destination, si une liaison de télécommunications vers le noeud (DN) de destination est admissible,
on insère dans une information de signalisation associée à la liaison de télécommunications à établir une seconde information identifiant le noeud (ON) d'origine,
caractérisé en ce que
on détermine dans des noeuds (TNn) de transit, sur la base de la seconde et de la première information, le noeud (TN(n+x), DN) directement suivant par lequel il faut passer.

2. Procédé suivant la revendication 1,
caractérisé en ce que
on insère dans l'information de signalisation associée à la liaison de télécommunications, pour former la liaison de télécommunications à établir dans des noeuds (TNn) de transit, vers lesquels on doit acheminer la liaison de télécommunications, une troisième information identifiant le noeud (TNn) de transit considéré et on détermine, dans des noeuds (TNn) de transit, vers lesquels on achemine la liaison de télécommunications, sur la base des première, seconde et troisième informations, le noeud (TN(n+x)) directement suivant par lequel il faut passer.

3. Procédé suivant l'une des revendications précédentes,
caractérisé en ce que
on augmente, dans la liaison de télécommunications à établir dans chaque noeud, vers lequel la liaison de télécommunications à établir est acheminée, le nombre des noeuds parcourus auparavant, du nombre "1", on compare ce nombre augmenté de "1" à un premier seuil pouvant être prescrit et on n'achemine la liaison à établir vers un autre noeud que lorsque le nombre augmenté de "1" est inférieur ou égal au premier seuil.

4. Procédé suivant l'une des revendications précédentes,
caractérisé en ce que
on achemine la liaison de télécommunications à établir entre deux noeuds (ON, TN1 ; TNT, TN2 ; ...) par l'intermédiaire de satellites, on compte le nombre des tronçons de voie de liaison parcourus entre deux noeuds (ON ; TNl ; TN1, TN2 ; ...) par l'intermédiaire de satellites et on le compare dans les noeuds (TN1 à TN7, DN) à un second seuil et on n'achemine la liaison des télécommunications à établir par l'intermédiaire de satellites vers un autre noeud, que lorsque le nombre des tronçons de voie de liaison parcourus par satellites est inférieur ou égal au second seuil.

5. Procédé suivant l'une des revendications précédentes,
caractérisé en ce que
on peut relier un noeud quelconque (ON, TN1 à TN7, DN) du réseau à un terminal (A') de télécommunication émetteur externe au réseau, ce noeud (ON, TN1 à TN7, DN) insère, pour ce terminal (A') de télécommunication, une seconde information propre désignant un noeud fictif d'origine, dans la liaison des télécommunications.
